# EUROPÄISCHE PATENTSCHRIFT

(11) **EP 1 320 176 B1**
(45) Veröffentlichungstag und Bekanntmachung des Hinweises auf die Patenterteilung: **12.05.2010**
(21) Anmeldenummer: 02027038.5
(22) Anmeldetag: 03.12.2002
(51) Int. Cl.: H02K 7/108, H02K 5/14, H02K 11/00

(54) **Betätigungsvorrichtung, insbesondere zur Betätigung von Sperrdifferentialen von Fahrzeugen**
Actuating device, namely for actuating a locking differential in vehicles
Dispositif d'actionnement, notamment pour actionner le verouillage d'un différentiel dans des véhicules

(30) Priorität: 12.12.2001 DE 10160846
(43) Veröffentlichungstag der Anmeldung: 18.06.2003
(73) Patentinhaber: Valeo Motoren und Aktuatoren GmbH, 74321 Bietigheim-Bissingen (DE)
(72) Erfinder: Frey, Ronald, 74357 Bönningheim (DE); Helmich, Johannes, 97877 Wertheim (DE); Schmidt, Harald, 74374 Zaberfeld (DE); Scheytt, Birgit, 75428 Illingen (DE); Baeskow, Werner, 74394 Hessigheim (DE)
(74) Vertreter: Hofmann, Harald

(56) Entgegenhaltungen:
- EP-A- 0 753 931
- WO-A-99/43071
- DE-C- 19 945 657
- US-A- 2 514 693
- US-A- 3 277 357
- US-A1- 2001 047 916

## Beschreibung

Die Erfindung betrifft eine Betätigungsvorrichtung, insbesondere zur Betätigung von Sperrdifferentialen von Fahrzeugen.

Derartige Betätigungsvorrichtungen finden insbesondere im Kraftfahrzeug zur Unterstützung der Antriebs- und Bremssysteme Verwendung. Sie umfassen regelmässig eine Antriebseinheit zum Antreiben einer Betätigungswelle und eine Abbremseinheit zum Abbremsen der Betätigungswelle. Über die Betätigungswelle kann ein Sperrdifferential zu- bzw. abgeschaltet werden. Den eigentlichen Schaltvorgang übernimmt hierbei die Antriebseinheit. Die Bremseinheit hält die Betätigungswelle in einer vorgegebenen Stellung.

Aus dem Patent US 2,514,693 ist eine Motoranordnung mit einer magnetischen Bremse bekannt, bei der jedoch noch keine Messeinrichtung zur Messung des Drehwinkels der Betätigungswelle vorhanden ist.

An derartige Betätigungsvorrichtungen sind hohe Anforderungen zu stellen. Insbesondere müssen die Betriebstemperaturen mehreren 100 DEG C standhalten. Die Betätigungswelle darf ferner nur einem relativ geringen Spiel unterliegen, um ein funktionssicheres Betätigen der Sperrdifferentiale gewährleisten zu können.

Das Vorsehen einer Sensoreinheit zur Messung des Drehwinkels hat den Vorteil, dass die genaue Stellung der Betätigungswelle bestimmbar ist. Zur genauen Schaltung des beispielsweise Sperrdifferentials ist es erforderlich, den Drehwinkel der Betätigungswelle exakt vorzugeben bzw. zu bestimmen. Aus WO 99/43071 ist eine Sensoreinheit zur Messung des Drehwinkels bekannt, bei der der Kommutator des Motors magnetisiert ist und das sich mit dem Kommutator drehende Magnetfeld über einen geeigneten Sensor ausgewertet wird. Bei den aus WO 99/43071 bekannten Ausführungsformen ist der magnetisierte Bereich des Kommutators in axialer Richtung von dem Kontaktbereich des Kommutators beabstandet, wodurch eine größere axiale Baugröße des Kommutators erforderlich wird.

Der vorliegenden Erfindung liegt deshalb die Aufgabe zugrunde, eine Betätigungsvorrichtung vorzuschlagen, bei der insbesondere ein sehr genaues Betätigen der Betätigungswelle möglich ist. Dabei soll die Betätigungseinrichtung möglichst wenig Bauteile aufweisen. Außerdem soll die Betätigungsvorrichtung einen einfachen Aufbau aufweisen und auf einfache Art und Weise montierbar sein. Die Betätigungsvorrichtung soll zudem kompakt bauen.

Diese Aufgabe wird von einer Betätigungsvorrichtung mit den Merkmalen des Patentanspruchs 1 gelöst.

Bei einer bevorzugten Ausführungsform der Erfindung ist das Geberrad an dem Bremsnabenflansch angeordnet. Dies hat den Vorteil, dass zur Anordnung des Geberrades auf der Betätigungswelle kein separates Bauteil vorzusehen ist. Dadurch reduziert sich die Anzahl der Toleranzen, die in den sich ergebenden Luftspalt zwischen dem sich drehenden Geberrad und dem feststehenden Sensor eingehen. Außerdem entfällt eine zusätzliche Montage des Geberrades auf der Betätigungswelle.

Vorzugsweise ist das Geberrad einteilig mit dem Bremsnabenflansch ausgebildet. Der das Geberrad umfassende Bremsnabenflansch kann folglich als separates Bauteil gehandhabt werden. Außerdem reduzieren sich aufgrund der einteiligen Ausbildung die Bauteiltoleranzen.

Eine weitere Ausgestaltung der Erfindung sieht vor, dass das Geberrad auf der dem freien Ende der Betätigungswelle abgewandten Seite bzw. auf der dem Kommutator zugewandten Seite des Bremsnabenflansches angeordnet ist. Dies hat den Vorteil, dass das Geberrad in einem Bereich angeordnet wird, der nicht für andere Bauteile benötigt wird.

Andererseits ist denkbar, das Geberrad nicht an dem Bremsnabenflansch, sondern an dem Kommutator anzuordnen. Diese Anordnung hat ebenfalls den Vorteil, dass keine zusätzliche Montage des Geberrades an der Betätigungswelle erforderlich ist. Ferner reduziert sich die Anzahl der Toleranzen; das vorgegebene Maß des Luftspaltes zwischen Geberrad und Sensor kann mit weniger fertigungstechnischem Aufwand eingehalten werden.

Vorteilhafterweise ist das Geberrad an der dem Ankerpaket abgewandten Stirnseite des Kommutators angeordnet. In diesem Bereich des Kommutators ist eine Anordnung des Geberrades ohne Beeinträchtigung anderer Bauteile möglich.

Eine besonders bevorzugte Ausführungsform der Erfindung zeichnet sich dadurch aus, dass das Geberrad in den Kommutator integriert ist. Dies hat den Vorteil, dass für das Geberrad kein extra Bauraum zur Verfügung zu stellen ist. Die gesamte Betätigungsvorrichtung kann deshalb kleiner bauen.

Vorteilhaft ist, wenn der Kommutator eine äußere Kontaktschicht und einen inneren, das Geberrad bildenden, Kern aufweist. Die Kontaktschicht ist vorteilhafterweise aus einem elektrisch leitenden Material, wie beispielsweise Kupfer. Sie dient als Kontaktanlage von Bürsten, die mit dem Kommutator zusammenwirken.

Vorteilhafterweise ist zwischen der Kontaktschicht und dem das Geberrad bildenden Kern eine Zwischenschicht vorgesehen. Diese Zwischenschicht kann elektrisch isolierend sein und insbesondere aus Pressmasse bestehen. Vorteil einer derartigen Zwischenschicht ist, dass mögliche Wechselwirkungen zwischen der Kontaktschicht und dem das Geberrad bildenden Kern des Kommutators unterbunden werden.

Eine vorteilhafte Ausgestaltung des Kommutators zeichnet sich dadurch aus, dass der Kommutator nach radial innen gerichtete Schlitzungen aufweist, die die Kontaktschicht in Lamellen bzw. in Ringsegmente unterteilen. Vorteilhafterweise sind die Schlitzungen so tief, dass sie das Geberrad in Geberradsegmente unterteilen, wobei die Gründe der Schlitzungen in dem das Geberrad bildenden Kern liegen. Dies hat den Vorteil, dass zur Herstellung des Kommutators zunächst sowohl der Kern als auch die Kontaktschicht als Ringzylinder ausgebildet werden. In einem nächsten Arbeitsschritt kann die Schlitzung des Kommutators erfolgen, wobei aufgrund der Schlitzungen der Geberradkern in Geberradsegmente unterteilt wird. Ein derartiger Kommutator kann folglich sehr kostengünstig hergestellt werden.

Vorteilhafterweise bilden die Lamellen bzw. die Ringsegmente des Kommutators das Geberrad. Die Lamellen bzw. die Ringsegmente haben dann aus einem entsprechenden Material zu sein. Eine derartige Ausgestaltung der Erfindung hat den Vorteil, dass ein zusätzliches Geberrad entfällt, wodurch Bauteile und Bearbeitungsschritte eingespart werden. Die direkte Abtastung der Lamellen bzw. Ringsegmente des Kommutators erfolgt vorteilhafterweise im Bereich der Schweißhaken.

Eine weitere, bevorzugte Ausführungsform der Erfindung zeichnet sich dadurch aus, dass auf der dem freien Ende der Betätigungswelle zugewandten Seite des Kommutators bzw. zwischen dem Bremsnabenflansch und dem Kommutator eine Bürstenhalteplatte mit Köchern und Bürsten zur Kontaktierung des Kommutators angeordnet ist. Vorzugsweise weist die Bürstenplatte neben den Köchern und Bürsten auch den Sensor auf. Dabei kann das Geberrad entweder an dem Kommutator bzw. in diesen integriert, oder an dem Bremsnabenflansch vorgesehen sein.

Der Sensor kann zum einen das Geberrad radial oder zum anderen axial abtasten.

Die Sensoreinheit kann insbesondere als Hall-Sensor-Einheit ausgebildet sein. Zum einen kann der Sensor magnetisch vorgespannt und das Geberrad aus ferritischem Material sein. Zum anderen kann der Sensor magnetisch nicht vorgespannt und das Geberrad aus magnetischem Material bzw. als Multipolring ausgebildet sein.

Vorteilhafterweise weist das Gehäuse ein topfförmiges Grundgehäuse und einen Gehäusedeckel mit einem Durchbruch für die Betätigungswelle auf. Dabei kann die Antriebseinheit in dem Grundgehäuse und die Bremseinheit in dem Gehäusedeckel untergebracht sein.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: einen Längsschnitt durch eine erste erfindungsgemäße Betätigungsvorrichtung,
- Figur 2: einen Querschnitt durch die Betätigungsvorrichtung nach Fig. 1 entlang der Linie II,
- Figur 3: einen Längsschnitt durch eine zweite erfindungsgemäße Betätigungsvorrichtung,
- Figur 4: einen Längsschnitt durch eine dritte erfindungsgemäße Betätigungsvorrichtung,
- Figur 5: einen Längsschnitt durch eine vierte erfindungsgemäße Betätigungsvorrichtung,
- Figur 6: Querschnitt durch den Kommutator der Betätigungsvorrichtung nach Fig. 5.

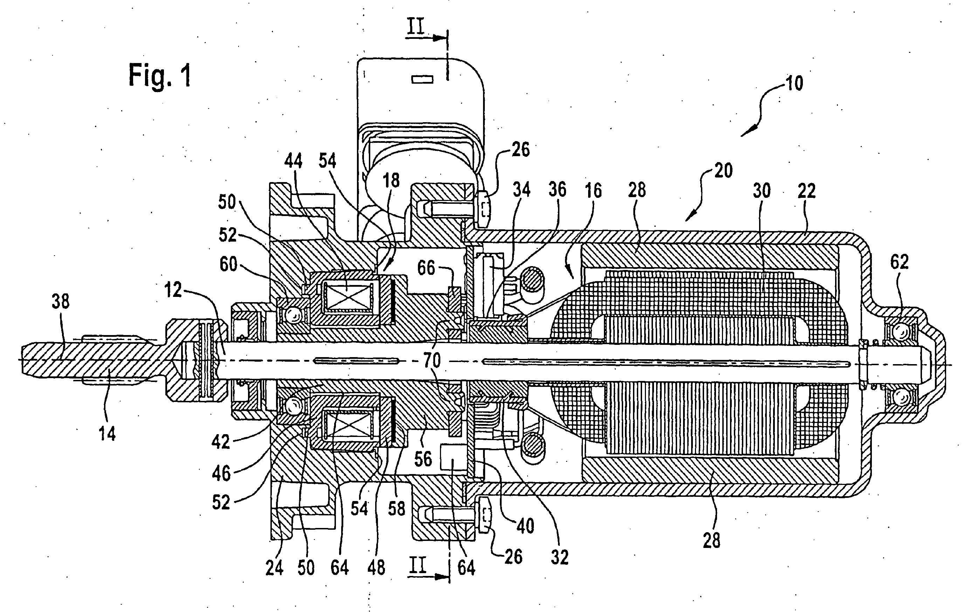

In der Figur 1 ist eine erste Ausführungsform einer erfindungsgemäßen Betätigungseinrichtung 10 dargestellt. Die Betätigungseinrichtung 10 weist an dem freien Ende einer Betätigungswelle 12 ein Ritzel 14 auf, über welches ein nicht dargestelltes Sperrdifferential eines Fahrzeuges betätigt werden kann. Dabei umfasst die Betätigungseinrichtung eine Antriebseinheit 16 und eine elektromagnetische Bremseinheit 18, wobei die Antriebseinheit 16 und die Bremseinheit 18 in einem gemeinsamen Gehäuse 20 untergebracht ist. Das Gehäuse 20 umfasst ein topfförmiges Grundgehäuse 22, welches die Antriebseinheit 16 aufnimmt. Ferner umfasst das Gehäuse 20 einen Gehäusedeckel 24, in dem die Bremseinheit 18 untergebracht ist. Mittels Verbindungsschrauben 26 kann der Gehäusedeckel 24 mit dem Grundgehäuse 20 dicht verschraubt werden.

Die Antriebseinheit 16 umfasst gehäuseseitige Dauermagnete 28, die mit einem auf der Betätigungswelle 12 drehfest angeordnetem Ankerpaket 30 zusammenwirken. Ferner umfasst die Antriebseinheit 16 einen auf der Betätigungswelle drehfest angeordneten Kommutator 32, gegen dessen Mantelfläche in Köchern 34 gelagerte Bürsten 36 wirken. Die Köcher 34 sind hierbei auf einer senkrecht zur Längsachse 38 der Betätigungswelle 12 angeordneten Bürstentrageplatte 40 befestigt.

Die Bremseinheit 18 umfasst einen drehfest auf der Betätigungswelle 12 angeordneten Bremsnabenflansch 42 sowie einen gegen den Gehäusedeckel 24 drehgesicherten, eine Bremswicklung 44 umfassenden Bremskörper 46. Ferner umfasst die Bremseinheit 18 eine gegenüber der Betätigungswelle 12 drehfest angeordnete, bedingt axial bewegbare Bremsscheibe 48, die als Bremsscheibenring ausgebildet ist. Bei Bestromung der Bremswicklung 44 wirkt die Bremsscheibe 48 gegen den ebenfalls ringförmig ausgebildeten Bremskörper 46. Bei Bestromung der Bremswicklung 46 tritt folglich der Bremseffekt ein und die Betätigungswelle 12 wird über den Bremsnabenflansch 42, die Bremsscheibe 48 und den Bremskörper 46 gegen das Gehäuse 20 bzw. gegen den Gehäusedeckel 24 drehgesichert. Zur drehsicheren Anordnung des Bremskörpers 46 in dem Gehäusedeckel 24 sieht der Bremskörper 46 sich koaxial zur Längsachse 38 erstreckende Zapfen 50 vor, die in entsprechend ausgebildete, gehäusedeckelseitige Sackbohrungen 52 ragen. Zur sicheren Halterung des Bremskörpers 46 innerhalb des Gehäusedeckels 24 sind Verstemmabschnitte 54 am Gehäusedeckel 24 vorgesehen, die in entsprechende Abschnitte an der Mantelfläche des Bremskörpers 46 verstemmt werden.

Um bei nicht betätigter Bremseinheit 18 eine definierte Position der Bremsscheibe 48 zu gewährleisten, ist zwischen der Bremsscheibe 48 und einem Bremsscheibenträgerabschnitt 56 des Bremsnabenflansches 42 ein Federelement 58 vorgesehen, dass die Bremsscheibe 48 gegen den Bremsscheibenträgerabschnitt 56 beaufschlagt.

Zur Lagerung der Betätigungswelle 12 sind zwei Lagerelemente 60 und 62 vorgesehen.

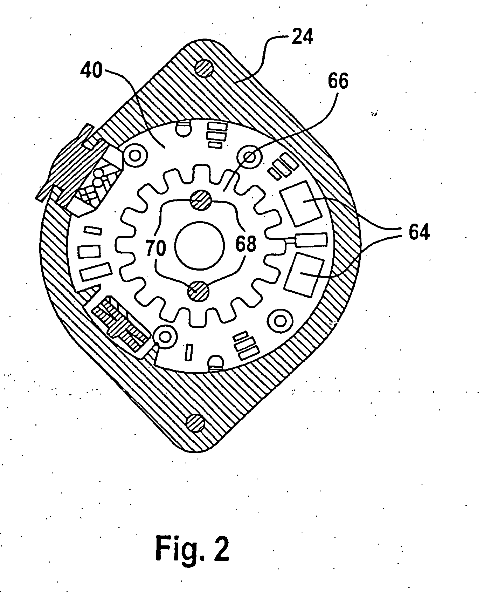

Wie der Figur 1 und der Figur 2 entnommen werden kann, sind auf der dem Bremsflansch 42 bzw. dem Bremsscheibentägerabschnitt 56 zugewandten Seite der Bürstentrageplatte 40 Sensoren in Form von Hall-Sensoren 64 angeordnet. Zur Erfassung des Drehwinkels der Betätigungswelle 12 ist an der der Bürstentrageplatte 40 zugewandten Seite des Bremsnabenflansches 42 bzw. des Bürstenträgerabschnitts 56 ein Geberrad 66 angeordnet. Mittels zwei Bohrungen 68 ist das Geberrad 66 an Befestigungszapfen 70 des Bremsnabenflansches 42 befestigt. Das Geberrad ist vorzugsweise aus einem ferritischen Material oder als Multipolring ausgebildet.

Die Anordnung des Geberrades 66 an dem Bremsnabenflansch 42 hat den Vorteil, dass zur Halterung des Geberrades 66 keine zusätzlichen Bauteile vorzusehen sind.

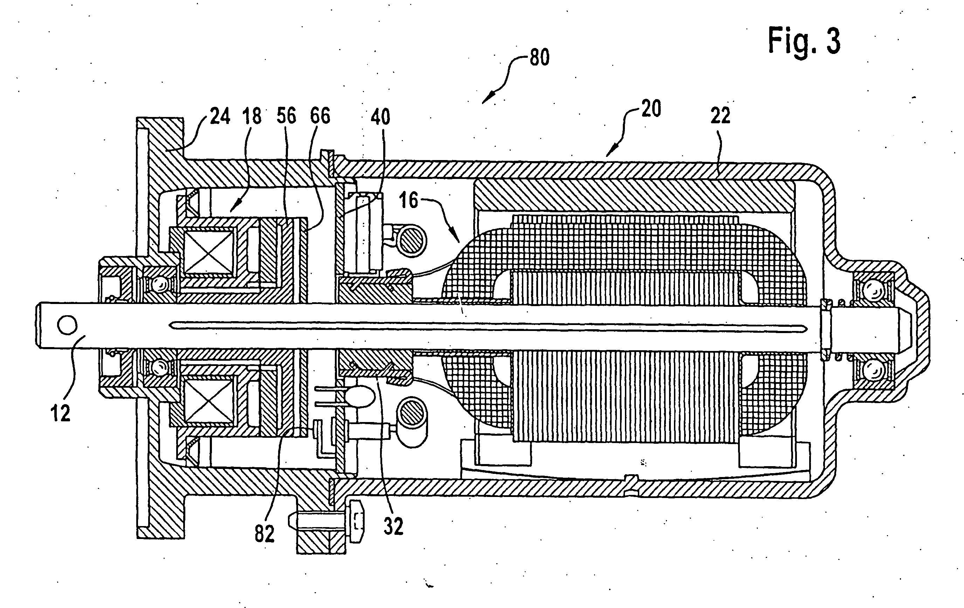

In den Figuren 3, 4 und 5 sind weitere erfindungsgemäße Betätigungseinrichtungen 80, 90 und 100 dargestellt. Der Betätigungseinrichtung 10 entsprechende Bauteile sind bei den Betätigungseinrichtungen 80, 90 und 100 mit den gleichen Bezugszahlen versehen.

Die Betätigungseinrichtung 80 unterscheidet sich von der Betätigungseinrichtung 10 u.a. dadurch, dass zur Bestimmung des Verdrehwinkels der Betätigungswelle 12 das Geberrad 66 nicht radial, sondern in axialer Richtung abgetastet wird. Dazu ist wenigstens ein entsprechend angeordneter Hall-Sensor 82 vorgesehen.

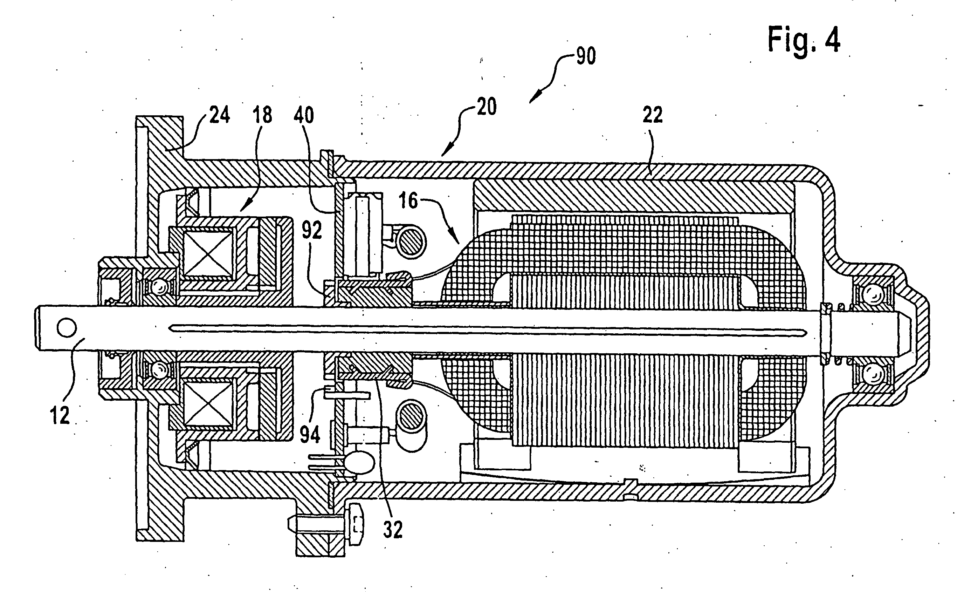

Die in der Figur 4 dargestellte Betätigungseinrichtung 90 weist ein Geberrad 92 auf, das an der der Bürstentrageplatte 40 bzw. der Bremseinheit 18 zugewandten Stirnseite des Kommutators 32 angeordnet ist. Das Geberrad 92 ist vorzugsweise abschnittsweise in das Kommutatormaterial, insbesondere in Pressmasse, eingebettet und durchgreift die Bürstentrageplatte 40. Das Geberrad 92 und der Kommutator 32 bilden ein gemeinsam handhabbares Bauteil.

Die Betätigungsvorrichtung 90 weist einen Sensor 94 in Form eines Hall-Sensors auf. Der Hall-Sensor 94 ist derart angeordnet, dass er das Geberrad 92 radial abtastet. Der Hall-Sensor 94 ist dabei an der Bürstentrageplatte 40 angeordnet.

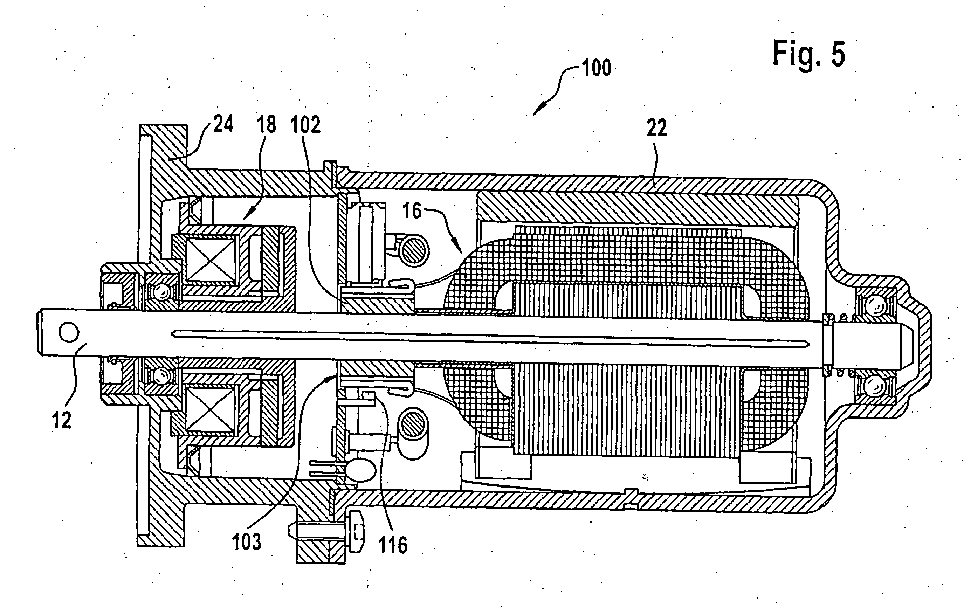

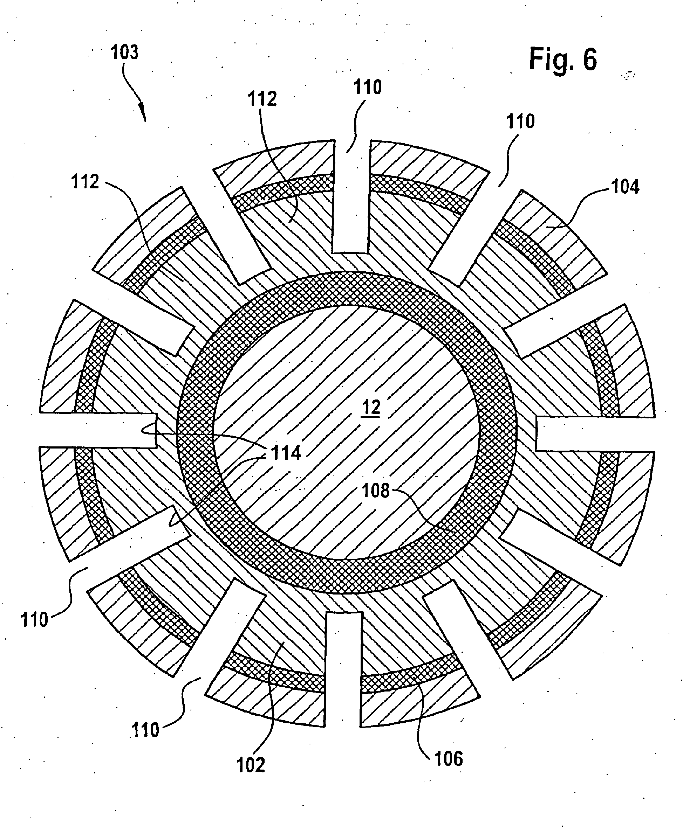

Die in der Figur 5 gezeigte Betätigungseinrichtung 100 weist ein Geberrad 102 auf, das vollständig in den Kommutators 103 integriert ist. In der Figur 6 ist ein Querschnitt durch den Kommutator 103 dargestellt. Deutlich zu erkennen ist, dass der Kommutator 103 eine außenliegende Kontaktschicht 104 aufweist. Die Kontaktschicht 104 ist aus einem leitfähigen Material, insbesondere aus Kupfer. An der Kontaktschicht 104 liegen im montierten Zustand die freien Enden der Bürsten 36 an. Das Geberrad 102 wird von einem innenliegenden Kern des Kommutators 103 gebildet. Zwischen dem Kern und der Kontaktschicht 104 ist eine Zwischenschicht 106 aus insbesondere isolierendem Material wie beispielsweise Pressmasse vorgesehen. An der an der Betätigungswelle 12 anliegenden Innenseite des Kommutators 103 ist vorteilhafterweise eine Innenschicht 108 vorhanden, die ebenfalls vorzugsweise aus Pressmasse besteht.

Wie aus Figur 6 deutlich wird, weist der Kommutator 103 nach radial innen gerichtete Schlitzungen 110 auf, die die Kontaktschicht 104 in Lamellen bzw. in Ringsegmente unterteilen. Die Schlitzungen 110 unterteilen außerdem das Geberrad 102 in zahnartige Geberradsegmente 112, wobei die Gründe 114 der Schlitzungen 110 in dem das Geberrad 102 bildenden Kern des Kommutators 103 liegen.

Zur Herstellung eines in der Figur 6 gezeigten Kommutators 103 können die einzelnen Kommutatorschichten als ineinanderliegende Zylinderringe hergestellt werden. Die Schlitzungen 110 können beispielsweise durch Ausschneiden bzw. Ausfräsen hergestellt werden.

Die jeweilige Position bzw. der jeweilige Drehwinkel des Geberrades 102 bzw. des Kommutators 103 wird durch auf der Bürstentrageplatte 40 vorhandene Sensoren 116, insbesondere Hall-Sensoren, abgetastet. Die Abtastung erfolgt gemäß Figur 5 in radialer Richtung.

Anstelle der Abtastung des Geberrades 102 ist ebenfalls erfindungsgemäß denkbar, die Kontaktschicht 104 bzw. die Lamellen oder Ringsegmente direkt abzutasten. Diese müssten dann aus einem geeigneten Material sein. Bei einer derartigen Ausführungsform wird dann kein extra herzustellendes Geberrad benötigt.

Alle in der Beschreibung, den nachfolgenden Ansprüchen und der Zeichnung dargestellten Merkmale können sowohl einzeln, als auch in beliebiger Kombination miteinander erfindungswesentlich sein.

## Patentansprüche

1. Betätigungsvorrichtung (10, 80, 90, 100), insbesondere zur Betätigung von Sperrdifferentialen von Fahrzeugen,
- mit einer Betätigungswelle (12)
- mit einer Antriebseinheit (16) zum Antreiben der Betätigungswelle (12), wobei die Antriebseinheit (16) ein auf der Betätigungswelle (12) drehfest angeordnetes Ankerpaket (30) sowie einen auf der Betätigungswelle drehfest angeordneten Kommutator (32, 103) umfasst, und .
- mit einem die Antriebseinheit (16) dicht umschließenden, ein- oder mehrteilig ausgebildeten Gehäuse (20), wobei das freie Ende der Betätigungswelle (12) aus dem Gehäuse (20, 22, 24) herausragt, und
- mit einer Sensoreinheit zur Messung des Drehwinkels der Betätigungswelle (12), wobei die Sensoreinheit wenigstens ein mit der Betätigungswelle (12) mittelbar gekoppeltes Geberrad (66, 92, 102) und wenigstens einen mit dem Gehäuse (20) mittelbar gekoppelten, die Geberradstellung abtastenden Sensor (64, 82, 94, 116) umfasst, wobei der Kommutator (32, 103) eine äußere Kontaktschicht (104), eine elektrisch isolierende Zwischenschicht (106) und einen Kern aufweist, der das Geberrad (102) bildet, wobei die isolierende Zwischenschicht (106) zwischen der Kontaktschicht (104) und dem das Geberrad (102) bildenden Kern vorgesehen ist, und radial nach innen gerichtete Schlitzungen (110), deren Gründe (114) in dem das Geberrad (102) bildenden Kern liegen, den Kommutator (32, 103) unterteilen und Lamellen in der Kontaktschicht und Geberradsegmente in dem Kern bilden.

2. Betätigungsvorrichtung (10, 80, 90, 100) nach Anspruch 1, **dadurch gekennzeichnet, dass** auf der dem freien Ende der Betätigungswelle (12) zugewandten Seite des Kommutators (32, 103) bzw. zwischen dem Bremsnabenflansch (42) und dem Kommutator (32, 103) eine Bürstentrageplatte (40) mit Köchern (34) und Bürsten (36) zur Kontaktierung des Kommutators (32, 103) angeordnet ist.

3. Betätigungsvorrichtung (10, 80, 90, 100) nach Anspruch 2, **dadurch gekennzeichnet, dass** der Sensor (64, 82, 94, 116) an der Bürstentrageplatte (40) angeordnet ist.

4. Betätigungsvorrichtung (10, 80, 90, 100) nach einem der vorhergehenden Ansprüche, **dadurch gekennzeichnet, dass** der Sensor (64, 116) das Geberrad (66, 92, 102) radial abtastet.

5. Betätigungsvorrichtung (80) nach einem der vorhergehenden Ansprüche 1-3, **dadurch gekennzeichnet, dass** der Sensor (82) das Geberrad (66) axial abtastet.

6. Betätigungsvorrichtung (10, 80, 90, 100) nach einem der vorhergehenden Ansprüche, **dadurch gekennzeichnet, dass** das Geberrad (66, 92, 102) zahnradartig ausgebildet ist.

7. Betätigungsvorrichtung (10, 80, 90, 100) nach einem der vorhergehenden Ansprüche, **dadurch gekennzeichnet, dass** die Sensoreinheit ein Hall-SensorEinheit ist.

8. Betätigungsvorrichtung (10, 80, 90, 100) nach Anspruch 7, **dadurch gekennzeichnet, dass** der Sensor (64, 82,94, 116) magnetisch vorgespannt ist und, dass das Geberrad (66, 92, 102) aus ferritischem Material ist.

9. Betätigungsvorrichtung (10, 80, 90, 100) nach Anspruch 8, **dadurch gekennzeichnet, dass** der Sensor (64, 82,94, 116) magnetisch nicht vorgespannt ist und, dass das Geberrad (66, 92, 102) aus magnetischem Material bzw. als Multipolring ausgebildet ist.

10. Betätigungsvorrichtung (10, 80, 90, 100) nach einem der vorhergehenden Ansprüche, **dadurch gekennzeichnet, dass** das Gehäuse (20) ein topfförmiges Grundgehäuse (22) und einen Gehäusedeckel (24) mit einem Durchbruch für die Betätigungswelle (12) aufweist.

11. Betätigungsvorrichtung (10, 80, 90, 100) nach Anspruch 10, **dadurch gekennzeichnet, dass** die Antriebseinheit (16) im Bereich des Grundgehäuses (22) und die Bremseinheit (18) im Bereich des Gehäusedeckels (24) angeordnet ist.

12. Betätigungsvorrichtung (10, 80, 90, 100) nach einem der vorhergehenden Ansprüche, mit einer elektromagnetischen Bremseinheit (18) zum Abbremsen und/oder Halten der Betätigungswelle (12), wobei die Bremseinheit (18) einen auf der Ankerwelle (12) drehfest angeordneten Bremsnabenflansch (42) umfasst, und mit einem die Antriebseinheit und die Bremseinheit dicht umschließenden, ein- oder mehrteilig ausgebildeten Gehäuse (20), wobei das freie Ende der Betätigungswelle (12) aus dem Gehäuse (20, 22, 24) herausragt.

## Claims

1. Actuation device (10, 80, 90, 100), particularly for actuation of limited-slip different tials of vehicles,
- with an actuation shaft (12),
- with a drive assembly (16) for actuating the actuation shaft (12), wherein the drive assembly (16) comprises an anchor packet (30), non-rotatably arranged on the actuation shaft (12), as well as a commutator (32, 103), non-rotatably arranged on the actuation shaft (12), and
- with a one or multipartly formed body (20), tightly enclosing the drive assembly (16) whereby the free end of the activation shaft (12) projects out of the body (20, 22, 24), and
- with a sensor assembly for measuring the rotation angle of the actuation shaft (12), wherein the sensor assembly at least comprises a sensor wheel (66, 92, 102) indirectly coupled to the actuation shaft (12) and at least comprises a sensor (64, 82, 94, 116), indirectly coupled to the body (20), sensing the sensor wheel position, wherein the commutator (32, 103) comprises an outer contact layer (104), an electrically insulating intermittent layer (106) and comprises a core forming the sensor wheel (102), wherein the insulating intermittent layer (106) is provided between the contact layer (104) and the core forming the sensor wheel (102), and slots (110) pointing radially inwards, the grounds of which are located within the core of the sensor wheel (102) divide the commutator (32, 103) and form lamellae in the contact layer and sensor wheel segments within the core.

2. Actuation device (10, 80, 90, 100) according to claim 1, **characterised in that** a brush holding plate (40) with tubulars (34) and brushes (36) is arranged for contacting the commutator (32, 103) on the side of the commutator (32, 103) facing the free side of the actuation shaft (12) or is arranged between the brake hub flange (42) and the commutator (32, 103), respectively.

3. Actuation device (10, 80, 90, 100) according to claim 2, **characterised in that** the sensor (64, 82, 94, 116) is arranged on the brush holding plate (40).

4. Actuation device (10, 80, 90, 100) according to any one of the above claims, **characterised in that** the sensor (64, 116) radially sensors the sensor wheel (66, 92, 102).

5. Actuation device (80) according to any one of the above claims 1 to 3, **characterised in that** the sensor (82) axially sensors the sensor wheel (66).

6. Actuation device (10, 80, 90, 100) according to any one of the above claims, **characterised in that** the sensor wheel (66, 92, 102) is formed as a toothed wheel.

7. Actuation device (10, 80, 90, 100) according to any one of the above claims, **characterised in that** the sensor device is a Hall sensor device.

8. Actuation device (10, 80, 90, 100) according to claim 7, **characterised in that** the sensor (64, 82, 94, 116) is magnetically pre-stressed and that the sensor wheel (66, 92, 102) is of a ferrite material.

9. Actuation device (10, 80, 90, 100) according to claim 8, **characterised in that** the sensor (64, 82, 94, 116) is not magnetically pre-stressed and, that the sensor wheel (66, 92, 102) is formed from a magnetic material or formed as ring comprising multiple poles, respectively.

10. Actuation device (10, 80, 90, 100) according to anyone of the above claims **characterised in that** the body (20) comprises a pot shaped base body (22) and a body lid (24) with an aperture for the activation shaft (12).

11. Actuation device (10, 80, 90, 100) according to claim 10, **characterised in that** the drive assembly (16) is arranged in the area of the base body (22) and the brake unit (18) is arranged in the area of the body lid (24).

12. Actuation device (10, 80, 90, 100) according to any one of the above claims, with an electromagnetic braking unit (18) for braking and/or holding the actuation shaft (12), wherein the braking unit (18) comprises a braking hub flange (42) non-rotatably ar ranged on the anchor shaft (12), and with a one or multi partly formed body (20) tightly enclosing the drive and the braking unit, wherein the end free end of the actuation shaft (12) projects from the body (20, 22, 24).

## Revendications

1. Dispositif d'actionnement (10, 80, 90, 100), en particulier pour l'actionnement des différentiels à blocage de véhicules,
- avec un arbre d'actionnement (12),
- avec une unité d'entraînement (16) pour entrainer l'arbre d'actionnement (12), l'unité d'entraînement (16) comprenant un induit (30) agencé fixement sur l'arbre d'actionnement (12) et un commutateur (32, 103) agencé fixement sur l'arbre d'actionnement (12), et
- avec un boitier (20), en un seul ou plusieurs morceaux, entourant en l'isolant l'unité d'entraînement (16), l'extrémité libre de l'arbre d'actionnement (12) faisant saillie du boitier (20, 22, 24), et
- avec une unité de détecteur pour mesurer l'angle d'orientation de l'arbre d'actionnement (12), l'unité de détecteur comprenant au moins une roue émettrice (66, 92, 102) couplée indirectement à l'arbre d'actionnement (12) et au moins un détecteur (64, 82, 94, 116) balayant les positions de la roue émettrice, couplé indirectement au boitier (20), dans lequel le commutateur (32, 103) comprend une couche externe de contact (104), une couche intermédiaire (106) isolante électrique et un noyau, qui forme la roue émettrice (102), la couche intermédiaire isolante (106) étant prévue entre la couche de contact (104) et le noyau formant la roue émettrice (102), et des rainures (110) dirigées radialement vers l'intérieur, dont les bases (114) sont situées dans le noyau formant la roue émettrice (102), cloisonnent le commutateur (32, 103) et forment des segments de roue émettrice dans le noyau et des lamelles dans la couche de contact.

2. Dispositif d'actionnement (10, 80, 90, 100) selon la revendication 1, **caractérisé en ce que** sur le côté du commutateur (32, 103) orienté vers l'extrémité libre de l'arbre d'actionnement (12), respectivement entre le flanc du moyeu de frein (42) et le commutateur (32, 103), une plaque de support de balai (40) est agencée avec des carquois (34) et des balais (36) pour interconnexion avec le commutateur (32, 103).

3. Dispositif d'actionnement (10, 80, 90, 100) selon la revendication 2, **caractérisé en ce que** le détecteur (64, 82, 94, 116) est agencé contre la plaque de support de balai (40).

4. Dispositif d'actionnement (10, 80, 90, 100) selon l'une quelconque des revendications précédentes, **caractérisé en ce que** le détecteur (64, 116) effectue un balayage radial de la roue émettrice (66, 92, 102).

5. Dispositif d'actionnement (80) selon l'une quelconque des revendications 1 à 3, **caractérisé en ce que** le détecteur (82) effectue un balayage axial de la roue émettrice (66).

6. Dispositif d'actionnement (10, 80, 90, 100) selon l'une quelconque des revendications précédentes, **caractérisé en ce que** la roue émettrice (66, 92, 102) est construite en forme de roue dentée.

7. Dispositif d'actionnement (10, 80, 90, 100) selon l'une quelconque des revendications précédentes, **caractérisé en ce que** l'unité de détecteur est une unité de détecteur à effet Hall.

8. Dispositif d'actionnement (10, 80, 90, 100) selon la revendication 7, **caractérisé en ce que** le détecteur (64, 82, 94, 116) est polarisé magnétiquement, et **en ce que** la roue émettrice (66, 92, 102) est constituée de matériau ferritique.

9. Dispositif d'actionnement (10, 80, 90, 100) selon la revendication 8, **caractérisé en ce que** le détecteur (64, 82, 94, 116) n'est pas polarisé magnétiquement, et **en ce que** la roue émettrice (66, 92, 102) est fabriquée à partir de matériau magnétique respectivement sous forme d'anneau multipoles.

10. Dispositif d'actionnement (10, 80, 90, 100) selon l'une quelconque des revendications précédentes, **caractérisé en ce que** le boitier (20) comporte un boitier de base en forme de creuset (22) et un couvercle de boitier (24) avec une ouverture pour l'arbre d'actionnement (12).

11. Dispositif d'actionnement (10, 80, 90, 100) selon la revendication 10, **caractérisé en ce que** l'unité d'entraînement (16) est agencée dans la zone du boitier de base (22) et l'unité de frein (18) est agencée dans la zone du couvercle de boitier (24).

12. Dispositif d'actionnement (10, 80, 90, 100) selon l'une quelconque des revendications précédentes, avec une unité de frein électromagnétique (18) pour le freinage et/ou l'arrêt de l'arbre d'actionnement (12), l'unité de frein (18) comprenant un flanc du moyeu de frein (42) agencé fixement sur de l'arbre d'actionnement (12), et avec un boitier (20) formé en un ou plusieurs morceaux, entourant en les isolant l'unité d'entraînement et l'unité de frein, dans lequel l'extrémité libre de l'arbre d'actionnement (12) fait saillie du boitier (20, 22, 24).
